# EUROPEAN PATENT APPLICATION

(11) **EP 4 033 271 A1**
(43) Date of publication of application: **27.07.2022**
(21) Application number: 21153601.6
(22) Date of filing: 26.01.2021
(51) Int. Cl.: G01T 1/20

(54) **DEVICES AND METHODS FOR DETECTING GAMMA RADIATION**

(71) Applicant: Multiwave Metacrystal S.A., 1228 Geneva (CH)
(72) Inventor: ZHANG, Lei, 92910 Meudon (FR); KONSTANTINOU, Georgios, 1217 Meyrin (CH); ANTONAKAKIS, Tryfon, 1204 Geneva (CH); LECOQ, Paul René Michel, 01170 CHEVRY (FR)
(74) Representative: Tribalyte Ideas

(57) **Abstract**

A device for detecting gamma radiation comprising an assembly (201) of scintillating and light-guiding materials, producing scintillation light (205) upon incidence of radiation (203), at least one photon-detector device (207) comprising a detection surface, optically coupled to the assembly; wherein the assembly comprises at least one photonic crystal slab (202) configured to direct said scintillation light (205) towards the detection surface along an extraction direction (209), the extraction direction (209) being substantially perpendicular to the detection surface, wherein the at least one photonic crystal slab (202) is arranged substantially perpendicular to the detection surface.

## Description

### TECHNICAL FIELD OF THE DISCLOSURE

The present disclosure relates to devices and methods for detecting radiation such as ionizing radiation. In particular, the present disclosure relates to devices and methods for detecting gamma ray radiation. The devices and methods of the present disclosure may be used in a number of applications, including medical imaging applications, such as, for example, positron-emission tomography (PET).

### BACKGROUND OF THE DISCLOSURE

One of the main research directions in the development of devices for the detection of ionizing radiation (radiation detectors) is related to the improvement of their timing resolution. Generally, in this context, the timing resolution is the uncertainty on the exact time of interaction between an incoming radiation (for example gamma rays) and the detector. Radiation detectors with improved timing resolution are faster and can therefore be used to detect shorter radiation pulses (for example below 1 ns) or a higher rate of radiation (for example higher than 100 MHz). The ability to detect radiation with high rates or short pulses is useful, for example, for high energy physics and radiation protection applications.

In the context of nuclear medicine, particularly in positron emission tomography (PET), a Coincidence Time Resolution (CTR) of the order of tens to hundreds of picoseconds (ps) allows retrieval of time-of-flight (TOF) information. This means that the reconstruction of a coincidence event in PET will not only provide the line-of-response, along which the initial positron-electron annihilation event took place, but also an estimation on the location where the event occurred. Therefore, a radiation detector with a better timing resolution improves the effective sensitivity of PET as such a radiation detector allows sufficient information to be available with less coincidence pairs, hence shortening the examination duration and reducing radiation dose absorbed by a patient (see LECOQ, P., Pushing the limits in Time-Of-Flight PET imaging, IEEE Trans. Radiat. Plasma Med. Sci. 1(6): 473-485). A common detector used in PET applications is based on the interaction between an incoming radiation and an assembly of scintillation materials, aka scintillators. Scintillation materials are materials able to absorb the energy of higher energy photons comprised in the incoming radiation and re-emit the energy in a shower of lower energy photons, in or around the visible spectrum, for example between 150 nm and 800 nm. The re-emitted photons travel within the relatively transparent volume of the scintillating material until the re-emitted photons exit at one or more of surfaces of the scintillating material. These photons are then detected upon reaching a detection surface of photon-detectors optically coupled to one or more of the scintillating material surfaces. The surfaces coupled with photon-detectors are called extraction surfaces. The photon-detectors may comprise for example, silicon photomultipliers (SiPM), avalanche photon-diodes (APD) or photo-multiplying tubes (PMT).

The assembly may also comprise light guiding materials, to facilitate light transport and extraction through simple optics. Light guiding materials may be simple optical grease or a lightguide, for example in the form of glass block (called lightguide) with a predetermined refractive index to enhance optical coupling between the scintillators and photon-detection devices, or opaque and reflective surfaces to limit the optical space within which the photons can propagate and direct them towards a particular area of the detection surface of the photon-detection device.

In scintillation materials, photons are produced through a cascade process that gradually transforms radiation energy into visible photons. The photons, hence, have random directions (which add up to an isotropic field) and timing characteristics that are depending on the intrinsic features of the scintillating materials.

For this reason, the assembly can also comprise light-guiding materials, to facilitate light transport from the location of the radiation interaction to the photon-detector and registration through simple optics. The light guiding materials may be optical grease or a glass block with particular refractive index to enhance optical coupling between scintillators and photon-detectors. The light guiding materials can alternatively comprise materials that reflect or absorb the photons in order to limit the optical space within which the photons can propagate and direct them towards a particular area of the detection surface of the photon-detector.

Nevertheless, light absorption and propagation uncertainties and difficulties in the extraction of light from the crystal to the photo-detection device further deteriorate timing resolution. These physical phenomena both limit the number of photons that reach the photon-detection device while also adding uncertainty on the time elapsed between the onset of an event (an incoming radiation interacting with the scintillator) and the detection of the reemitted photons. Timing resolution is a standard deviation that describes the distribution of time difference between each event and the photodetection of the re-emitted photons resulting from this event.

A general goal in this context relates to the choice of the design of the assembly, in particular the type and geometrical arrangement of the scintillation materials and light-guiding materials in the assembly in order to improve the timing characteristics of the photons reaching the photon-detector.

Materials such as Lutetium-Yttrium Orthosilicate (LYSO) and organic scintillators based on polyvinyltoluene (PVT) generally constitute the standard regarding timing resolution, providing a shower of more than 1000 optical photons within the first ns of scintillation.

Scintillators with large volume (for example above 25 mm per mm² of detector surface) generally improve detector efficiency, while deteriorating timing resolution. It results that the geometry of the scintillator is chosen due to a trade-off between those two quantities. For this reason, different approaches exist to optimize light collection and time resolution for radiation detectors. A known design of devices for detecting radiation comprises monolithic scintillators (with dimensions generally exceeding 10x10x10 mm³), read out by a plurality of photon-detectors. Reconstruction and recombination of the numerous signals from the plurality of photon-detectors allows for the characterization of timing, energy and location of the radiation interaction within the scintillator (see LAMPROU, E. et al. (2020). Exploring TOF capabilities of PET detector blocks based on large monolithic crystals and analog SiPMs, Physica Medica, 70, 10-18).

Another known design, referred to as a pixelated detector comprises elongated scintillator rods of high aspect ratio that are wrapped in reflecting material and allow light to be extracted on only one or two sides. Such designs, given the reduction of optically connected volume, provide an easier characterization of the radiation interaction timing. A recent trend on scintillator design favors a combination of different scintillating materials with sub-millimeter size on at least one dimension to benefit from shared interactions between the different materials and from a synergistic combination of their favorable characteristics in timing and detection efficiency. All of these approaches are limited by the intrinsic characteristics of the scintillators as well as the geometrical characteristics of the detector, which directly affect photon propagation, extraction, absorption and statistical nature of their detection (see KONSTANTINOU, G. et al. (2020), A novel metascintillator approach for ultra-fast timing in Positron Emission Tomography, In 2020 IEEE Nuclear Science Symposium and Medical Imaging Conference (NSS/MIC), pp. 1-4, IEEE).

Another method for improving timing resolution of radiation detectors relates to the use of photonic crystals (PhC). PhCs are structures with dimensions in the order of the wavelength of the scintillation photons (for example tens to hundreds of nanometers) that interact with light in a non-classical manner, similarly to metamaterials. In general, this non-classical interaction corresponds to the bending of light towards desired directions in a way that would not be possible with conventional materials. Difficulty in constructing 3-dimensional PhC has led to the development of PhC slabs, where one of the three dimensions is orders of magnitude smaller than the other two (for example in the present context a PhC slab features dimensions of 3 mm x 25 mm x 100 nm). PhC slabs are practically two-dimensional coatings, where the lateral dimensions can extend to the level of centimeters, while the height remains within the order of nanometers. Radiation detectors comprising PhC have been successful on improving extraction of scintillation light, see e.g., SALOMONI; M. et al., Enhancing Light Extraction of Inorganic Scintillators Using Photonic Crystals, Crystals 2018, 8(2), 78 and US 8481948 B2 (FRACH, T et al.) July 9, 2013*.*

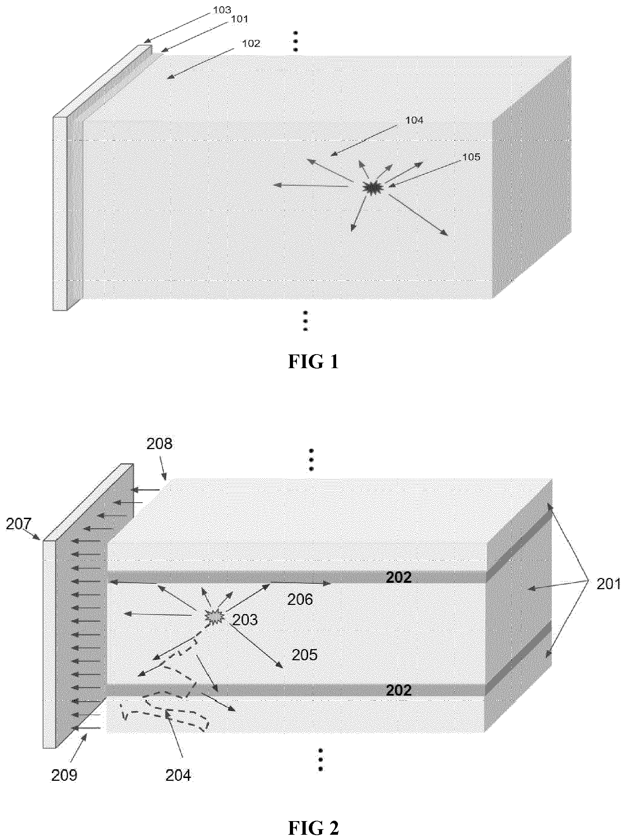

Figure 1 represents a device for detecting gamma radiation according to the prior art. Such a device comprises an assembly 102 of scintillating and light-guiding materials with at least one light extraction surface, producing scintillation light 104 through interaction with incoming radiation 105; a photon-detector comprising a detection surface 103 and a photonic crystal slab 101 included in the assembly. The photonic crystal slab 101 is arranged substantially parallel to the extraction and detection surfaces in order to facilitate light extraction. Improved light extraction leads to more photons being available, improving the statistical characteristics of photon detection and by extension its timing resolution.

In the cited detector, the PhC slabs parallel to the photon-detection surface are used to favor some light extraction modes and collimate the light in certain preferred directions. While this approach does improve timing resolution, the isotropic character of the photons in the scintillation light remains a limiting factor that is not addressed. Similarly, this solution does not affect their travel path and optical absorption. There are cases where timing should be retrieved by a mere handful of optical photons, for which only extraction improvement is not enough. Moreover, the statistical distribution of light travel time within the scintillator is not addressed, which means that apart from a larger population of available, extracted photons, statistical information on photon-detection is not improved. There is interest in new designs that address all of the aforementioned uncertainties on timing resolution.

### SUMMARY OF THE DISCLOSURE

In what follows, the term "comprise" is synonym of (means the same as) "include" and "contains", is inclusive and open, and does not exclude other non-recited elements. Moreover, in the present disclosure, when referring to a numerical value, the terms "about" and "substantially" are synonyms of (mean the same as) a range comprised between 80% and 120%, preferably between 90% and 110%, of the numerical value.

According to a first aspect, the present disclosure relates to a device for detecting gamma radiation comprising an assembly of scintillating and light-guiding materials, producing scintillation light upon incidence of radiation, and at least one photon-detector device comprising a detection surface, optically coupled to the assembly. The assembly may comprise at least one photonic crystal slab configured to direct said scintillation light towards the detection surface. The at least one photonic crystal slab may be arranged substantially perpendicular to the detection surface.

According to one or more embodiments, the at least one photonic crystal slab may be configured to direct said scintillation light towards the detection surface along an extraction direction, the extraction direction being substantially perpendicular to the detection surface.

The applicant has demonstrated that, by virtue of the device herein described, the scintillation light produced from interaction of the incoming radiation with the detector is directed towards the extraction surface, thus having to traverse a smaller distance in the scintillator than in devices of the prior art, thereby reducing absorption. In the device according to the present disclosure, scintillation light isotropy may be controlled by the change on the travel path of photons, to create a more uniform energy flux towards extraction surface than otherwise, thus improving, *inter alia,* transport within the scintillator and the statistical characteristics of detection, while photons may meet the extraction surface of the scintillator at a substantially right angle, further improving extraction probability. All these factors contribute synergistically to a significant improvement of radiation detector timing resolution.

According to one or more embodiments, the at least one photonic crystal slab comprises a periodic pattern, which may comprise a predetermined periodicity and predetermined features of dimensions, for example between 10nm and 1000nm. According to one or more embodiments, the at least one photonic crystal slab comprising a periodic pattern may be configured to direct scintillation light through a leaky mode.

The scintillation light produced by the scintillator may be therefore coupled with the photonic crystal slab and is directed towards the photon-detector device at a substantially right angle.

According to one or more embodiments, the at least one photonic crystal slab comprises a periodic pattern, which may comprise a predetermined periodicity and predetermined features of dimensions, for example between 10nm and 1000nm, and scintillating materials. According to one or more embodiments, the at least one photonic crystal slab comprising a periodic pattern may be configured to direct scintillation light through a guided mode.

The scintillation light produced within the photonic crystal slab may be confined and propagate towards the photon-detector device with a substantially right angle.

According to one or more embodiments, the at least one photonic crystal slab may be homogenous and may be optionally configured to direct scintillation light through Fabry-Perot interference.

This approach also guides scintillation light that couples with the photonic crystal slab towards the photon-detector device at a substantially right angle, while its construction is significantly simpler.

According to one or more embodiments, the at least one photonic crystal slab is manufactured by using a nanofabricated master mold.

According to one or more embodiments, the at least one photonic crystal slab may be directly imprinted on a nano-manufactured scintillator surface.

According to one or more embodiments, the at least one photonic crystal slab may comprise materials such as Si, SiO₂,Si₃N₄, SiC, GaP, GaAs, Nb₂O₅, Au, Ag, or a combination thereof.

According to one or more embodiments, the scintillating materials may comprise materials such as BGO, LSO, LYSO, GSO, NaI, Csl, BaF2, LaBr3, LuAP, LuAG, GGAG, CdSe, PVT-PPP, MAPbBr3, or a combination thereof.

According to one or more embodiments, the scintillating materials may further comprise organic scintillators, materials with a perovskite structure, or a combination thereof.

According to one or more embodiments, the at least one photonic crystal slab may have a periodic pattern configured to direct scintillation light predominantly towards a first direction. The first direction may be the extraction direction, and may be substantially perpendicular to the detection surface.

According to one or more embodiments, the periodic pattern of the at least one photonic crystal slab may be further configured to direct scintillation light towards a second direction. The second direction may be perpendicular to the first direction.

According to one or more embodiments, the at least one photonic crystal slab may comprise features that are geometrically arranged to change depending on a distance from the detection surface.

Such features may provide different light distribution impinging on the detection surface depending on the depth-of-interaction of the incoming radiation with the detector.

According to one or more embodiments, the device for detecting gamma radiation may further comprise a plurality of photonic crystal slabs. The plurality of photonic crystal slabs may be arranged substantially parallel to each other and may form a stack.

According to one or more embodiments, the plurality of photonic crystal slabs may have different designs, which may for example lead to different effects acting synergistically, for instance better focusing light towards a given direction or point of extraction.

According to one or more embodiments, the assembly may comprise rods, for example elongated rods, which may be separated by a plurality of photonic crystal slabs.

According to one or more embodiments, the at least one photonic crystal slab may comprise a plurality of periodic patterns of features.

According to a second aspect, the present disclosure relates to a method for detecting gamma radiation comprising:
producing scintillation light through interaction of incoming radiation with an assembly of scintillating and light-guiding materials;
detecting the scintillation light with a photon-detector device comprising a detection surface optically coupled to the assembly;
wherein the scintillation light is directed towards the detection surface using at least one photonic crystal slab included in the assembly;
wherein the at least one photonic crystal slab comprises a periodic pattern and is arranged substantially perpendicular to the detection surface.

Embodiments of the method may comprise steps corresponding to the features of any of the embodiments of the device described herein.

### DESCRIPTION OF THE DRAWINGS

Other advantages and features of the disclosure will become apparent on reading the description, illustrated by the following figures which represent:
- Fig. 1 represents a device for detecting gamma radiation according to the prior art;
- Fig. 2 represents a device for detecting gamma radiation according to an embodiment of the present disclosure;
- Fig. 3 represents diagrams illustrating the change in the direction of optical energy flux in different types of device for detecting gamma radiation;
- Fig. 4A represents a top-view of a photonic crystal slab according to an embodiment of the present disclosure;
- Fig. 4B represents a side-view of a photonic crystal slab according to an embodiment of the disclosure, comprising soft scintillating materials;
- Fig. 5 represents a top view and a side view of a photonic crystal slab according to an embodiment of the present disclosure, comprising a line defect to guide photons;
- Fig. 6 represents a top view of a photonic crystal slab according to an embodiment of the present disclosure (central panel), and the iso-frequency contours (left panel) and energy heat map (right panel) of an optical energy flux in said photonic crystal slab;
- Fig. 7 represents a device for detecting gamma radiation according to an embodiment of the present disclosure, comprising a plurality of scintillator rods;
- Fig. 8 represents a device for detecting gamma radiation according to an embodiment of the present disclosure, comprising a plurality of photonic crystal slabs forming a stack.

### DETAILED DESCRIPTION OF EMBODIMENTS OF THE DISCLOSURE

A detailed description of the disclosure related to embodiments thereof, based on Figures. 2-8 of this document, is set forth below. Said description is provided for illustrative, but not limiting, purposes.

Figure 2 represents a device for detecting gamma radiation according to one or more embodiments of the disclosure.

In the example shown in Fig. 2, the device comprises a scintillator assembly comprising a plurality of scintillators 201 for generating scintillation light 205 upon incidence of radiation 203 to a scintillator of the plurality of scintillators and distributing the scintillation light to the other scintillator(s) of the plurality of scintillators. Each of the plurality of scintillators can receive the radiation and reemit scintillation light. The scintillation light can then propagate inside the scintillator along several directions and transmit a part of the scintillation light to other scintillators.

Additionally, the device comprises at least one photon-detector 207 comprising a detection surface optically coupled to the scintillator assembly, and at least one photonic crystal slab 202 configured to direct the scintillation light 205 towards the detection surface along an extraction direction 209. The extraction direction 209 is substantially perpendicular to the detection surface.

The at least one photonic crystal slab can comprise a plurality of photonic crystal slabs. In the embodiment shown in Fig. 2, the at least one photonic crystal slab 202 comprises two PhC slabs. The plurality of photonic crystal slabs may be arranged so that they are separated by a distance from each other, for example, a distance of about 0.1 mm to about 3 mm from each other. Scintillating materials and photonic slabs may be cut and nanostructured separately and fitted together to create the scintillator assembly.

In the device according to the disclosure, an incoming gamma photon interacts with the scintillator at an initial location 203. When the interaction energy is more than the energy keeping core electrons in a stack of some of the atoms of the scintillator, the electron is excited, undergoes transition out of position, is emitted and travels 204 in the material as a recoil electron, losing energy through minor interactions with the scintillating material and production of excitons, until its excess energy is reduced and it is reabsorbed by the material. Due to the band structure of the scintillator, these interactions lead to the production of photons 205 in the UV and optical spectrums, which will be referred to as scintillation light in the present description. Each PhC slab 202 interacts with the scintillation light 205 with a stochastic possibility of changing the general orientation of a portion 206 of the photons towards desired directions along the two largest surfaces of the PhC slab 202. As the PhC slabs 202 are arranged perpendicularly to the extraction surfaces, a portion of the photons is directed towards the extraction surface of the scintillator 208 which is optically coupled to the photon-detector 207 (extraction direction 209).

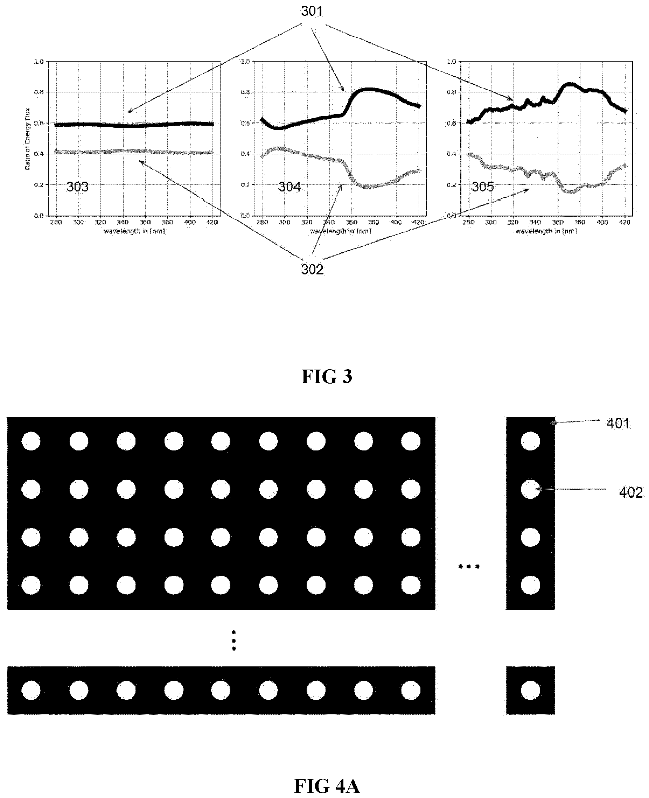

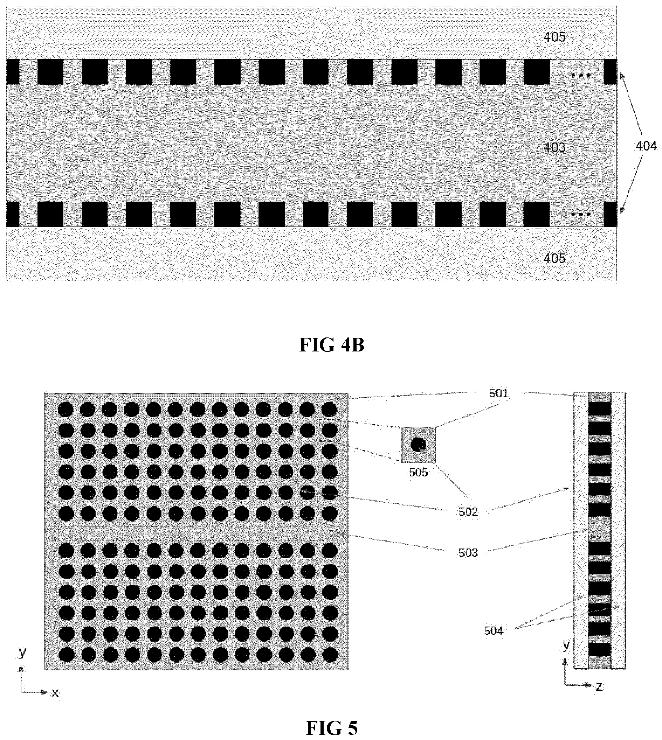

This general mechanism will be described, in the present description, as "light being directed", and can be performed through various physical effects termed propagation modes, some of which will be described in the following paragraphs. In detail, scintillation light of particular wavelength resonates with the PhC slab depending on its dimensions, material, characteristics of the nanofabricated features in the PhC slab (said features will be introduced when describing Fig. 4). The characteristics of said features comprise, for example, size, shape, symmetry, and periodicity. The periodicity of the feature can comprise, for example, period, orientation and symmetry.

Scintillation light can interact with the PhC slab in different ways. If scintillation photon production takes place outside of the PhC slab, these are directed through interaction referred to as quasi-guided modes or "leaky modes". The leaky modes are anomalous effects that became known as Wood's anomalies, as they could not be explained by ordinary theory of diffraction. When the light radiated through this leaky mode arrives on the PhC slab, part of its energy is coupled in the structure and then propagates along the PhC slab. Then the light that is decoupled interferes with both the transmitted and reflected light, and at a certain resonance wavelength, the de-coupled light interferes destructively with the transmitted light but constructively with the reflected light, resulting in highly efficient resonant reflection for a particular wavelength interval. This phenomenon named Guided Mode Resonance (GMR) occurs only when certain conditions on wave vector, frequency and polarization are met. Thanks to their high degree of tunability in terms of optical properties and the variety of possible fabrication processes and materials developed recently, GMRs have been implemented in extremely diverse applications: refractive index and fluorescence biosensors, solar cells and photon-detectors, optical communication and signal processing among others. In simpler terms, leaky modes correspond to coupling of light arriving at the photonic crystal slab from outside.

With regard to the distribution of energy of a "guided mode", under the light line, within the photonic crystal slab, embedded in-between upper and lower claddings, it is observed that the mode's electromagnetic field takes a maximum inside the high-index layer and decays exponentially away from it in the claddings. In short, this corresponds to light produced within the PhC being directed within and around the PhC slab towards its lateral directions. This corresponds to light being produced within the photonic crystal slab. For this to happen, the PhC slab material should be able to produce photons.

Another manner of interaction is the Fabry-Perot interference between the light launched into it and the light circulating in the resonator. Constructive interference occurs if the two beams are in phase, leading to resonant enhancement of light inside the resonator. If the two beams are out of phase, only a small portion of the launched light is stored inside the resonator. The stored, transmitted, and reflected light is spectrally modified compared to the incident light. The way these modes and interaction mechanisms are relevant to the disclosure will be further explained in the next paragraphs.

In general, scintillation is a property common in various crystals and organic compounds. A non-exhaustive list of those includes BGO, LSO, LYSO, GSO and other oxides, NaI, CsI and other Iodides, BaF₂ and other fluorides, LaBr₃ and other bromides, LuAP, LuAG and/or GGAG and other garnets, quantum dots such as CdSe and other selenides organic scintillators, organic glass scintillators and materials with perovskite structure. Organic scintillators usually composite materials combining a plastic substrate such as PVT (polyvinyltoluene) and a material that provides organic fluorescent emitters, called fluor agents, such as polyphenyl hydrocarbons, oxazole and oxadiazole aryls, especially, n-terphenyl (PPP), 2,5-diphenyloxazole (PPO), 1,4-di-(5-phenyl-2-oxazolyl)-benzene (POPOP), 2-phenyl-5-(4-biphenylyl)-1,3,4-oxadiazole (PBD), and 2-(4-tert-butylphenyl)-5-(4"-biphenylyl)-1,3,4-oxadiazole (B-PBD). Such components are collectively called organic scintillators in the art. Such scintillators can be used in the proposed disclosure, alone or in combination. This means that in Fig. 2, scintillator 201 can be a different material in every iteration, in the same embodiment.

PhC slabs cam comprise high refractive index materials such as the aforementioned scintillators, but can also comprise various semiconductors or metals. A non-exhaustive list of such includes Si, SiO, SiC, GaP, GaAs, Nb₂O₅, Au, Ag or a combination thereof.

Due to the complex geometry, it is not easy to fabricate 3-dimensional photonic crystals for infrared or optical wavelength ranges. That's why attention is turned to structures with periodicity in x and y direction with the material's property remains invariable along the z direction, this class of design is named PhC slab or planar PhC. Along the thickness direction, the energy of light is contained inside the slab by index guiding, thanks to the high average refractive index of component materials used.

Figure 3 represents the evolution of the lateral 301 and axial 302 optical energy flux with respect to the wavelength of the re-emitted photons for three different detector designs: a detector of the prior art without PhC slab 303; and detectors wherein the scintillation light is directed to the detection surface through Fabry-Perot interference 304 or through leaky modes 305. In particular, Fig. 3 shows that, in presence of a PhC slab, the optical energy flux is enhanced towards the lateral direction 301 at the expense of the axial direction 302 and the statistical characteristics of isotropic light are altered. This interaction is different and quantified accordingly depending on the type of interaction and light guiding mode, such as Fabry-Perot interference 304, leaky mode 305 or guided mode, but is in any case improved as compared to the lack of a PhC structure 303.

In order to obtain Fabry-Perot interference in case of a homogeneous slab, the thickness of the slab is tuned to make the light with specific incidence angles stay in phase. In case of a photonic crystal slab, a similar tuning can also be useful based on the effective refractive index of the mixture which is calculated by high frequency homogenization.

According to other embodiments, the PhC slab can be constructed following a concept of metascintillators. In this concept, the PhC slab includes scintillating materials so that it can play a dual role of both producing scintillation light 205 and guiding the emitted photons towards the photon-detector setup through guided mode, as mentioned earlier. In particular, quantum dots such as CdSe or lead halide perovskite nanocomposite scintillators can be nano-structured and can have a reasonably high refractive index suitable for fabricating PhC slabs.

Moreover, further enhancement of lateral energy flux can be achieved through leaky mode interaction, with a wave source (scintillation photon production onset) located out-of-plane. This occurs when the impinging wave (scintillation light) has the same characteristics (frequency & transverse wave vector) as one of the leaky modes of the PhC slab. With the preferred embodiment of a fast scintillator placed inside the PhC slab, the optimal confinement and directional guiding of wave from the in-plane wave source is realized by the guided modes of PhC slab.

The PhC slabs may have different designs depending on the desired effect and wavelength. Figure 4A represents a top-view of a PhC slab according to embodiments of the present disclosure. In the embodiments shown in figure 4A, the PhC slab comprises a base of high refractive index material 401 and features 402 forming a periodic pattern. The features can be, for example, protrusions, depressions or holes.

The dimensions of the periodic pattern (periodicity) and the dimensions of the features are of the order of magnitude of the wavelength of the light that is meant to be guided. In particular, such features can have dimensions between about 10 nm and about 1000 nm. Consequently, in the case of PhC slabs for use in the UV, visible, and near IR domain, the features are fabricated in the PhC slab using processes involving some form of nano-fabrication.

When a periodic pattern is to be designed nano-structuration is necessary; such process usually starts with the fabrication of a master mold that is then used to either etch, nano-imprint, structure, hot-depose the materials that form the PhC slab. This particular embodiment corresponds to the energy flux alteration of Fig. 3 (right), where the axial flux is reduced and lateral flux is enhanced in a manner variable and dependent on the dimensions of the design and optical properties of the materials (direction of periodicity).

Figure 4B represents the same preferred embodiment in the case that it can take advantage of the presence of a soft material such as a PVT-based material 403 or other soft materials in metascintillator concepts. In particular, the soft nature of this material allows its surface to be etched based on the master mold and the PhC slab base material 404 to be deposited directly on the PVT surface. In this case, photons produced in the scintillating plastic are obstructed form crossing into the LYSO 405 crystal which could absorb them. In this embodiment, the PhC slab interacts with the scintillation light through leaky modes. The thickness of the PhC slab 404 is within the order of magnitude of the wavelength of the scintillation light, i.e. from about 10 nm to about 1000 nm.

According to one or more embodiments, PhC slabs can have a design that is suitable not only for enhancing the lateral flux of optical energy, but also enhancing the flux predominantly in one specific lateral direction over the second lateral direction or the axial direction. so that the population of photons to be detected is further enhanced and the statistical distribution of the photons is improved.

The enhancement of flux in one specific lateral direction can be achieved through various ways, such as, for instance, an asymmetry in the periodic pattern, the orientation or the shape of the features. In that case, the enhancement of flux in one specific lateral direction can also be achieved by placing PhC slabs in a periodic sequence along the axial direction.

Figure 5 represents a PhC slab acting both as a scintillating material generating photons and as a light guide. In the example of Fig. 5, the PhC slab comprises a base 501 comprising a scintillator with quantum dots (for example CdSe quantum dots) and circular features 502 with a refractive index that is different from the refractive index of the base 501 at the frequency of the scintillation light. Thanks to the high refractive index difference between the base and the features, combined with a repeated pattern 505, the PhC slab imposes a complete band gap around the frequency of scintillation light. Furthermore, the PhC slab comprises a line defect 503 along a direction that restricts the propagation of photons within the line defect, so that the propagation of photons is only allowed inside it. The energy flux may further be confined in the axial direction thanks to two optical reflectors/insulators 504.

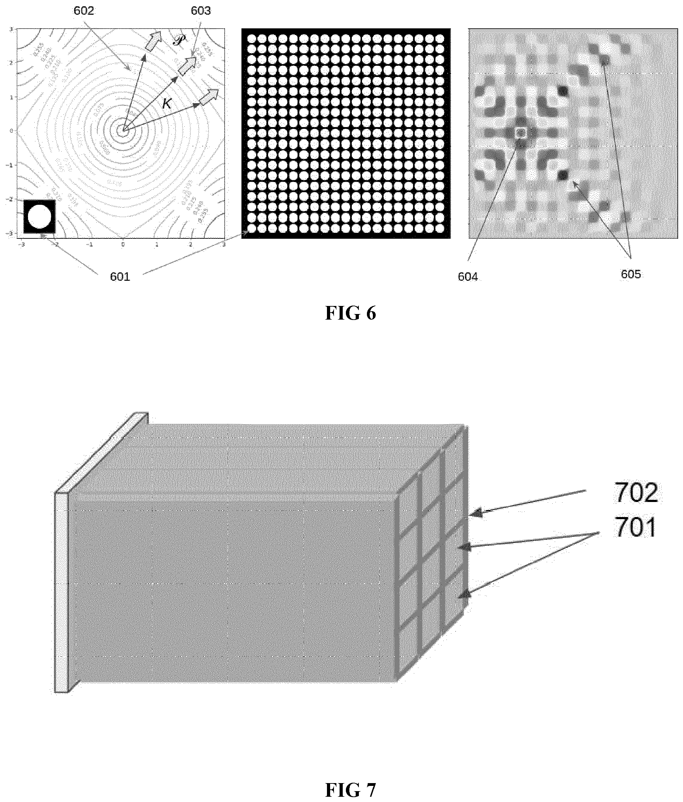

The directionality of energy flux inside the PhC slab can also be achieved via the self-collimation effect whose principal mechanism is shown with in the example depicted in Fig. 6.

In Fig. 6, the left plot shows the iso-frequency contours of a 2D periodic pattern 601. For some in-plane propagating waves, the wave vectors K 602 are presented as single line arrows with different phase direction, starting from the center and pointing to the corresponding contour line. The Poynting vectors P 603 are equal to the gradient of iso-frequency surface and are therefore aligned. The right plot represents the result of a numerical simulation which shows that it is possible to have the radiation of a point wave source 604 enforced only in two diagonal directions 605 that are orthogonal to each other.

The device presented in Fig. 2 is the conceptual building block of the device for the detection of gamma radiation. The whole detector comprises of a multitude of these blocks, depending on the application. For instance, for PET, detectors need to encapsulate the subject under study. Thus, this building block can be repeated multiple times along the lateral directions, with the orientation and dimensions of this repetition pattern depending on the application and design, as will be explained in the following. There are various ways that the detector might be designed. In the case of a pixelated design as represented in Fig. 7, a detector comprises high-aspect ratio elongated scintillator rods 701. In the pixelated design, the PhC slabs can substitute pixel barriers 702 between the rods. In this embodiment, the PhC slabs generally comprise enhanced specular reflector materials or materials comprising Teflon and are arranged in a similar crossing pattern. This does not limit the system from including both PhC slabs within the pixels, as well as other light guiding materials such as reflectors functioning as pixel barriers.

In the case of a quasi-monolithic design, PhC slabs are arranged at regular intervals of few millimeters apart, confining the optical space over one dimension.

In the case of a monolithic design, the scintillator has only its external surfaces covered with PhC slabs, so that photons produced through gamma interactions are predominantly directed towards the photon-detection setups, instead of being reflected back, on scintillator edge interactions.

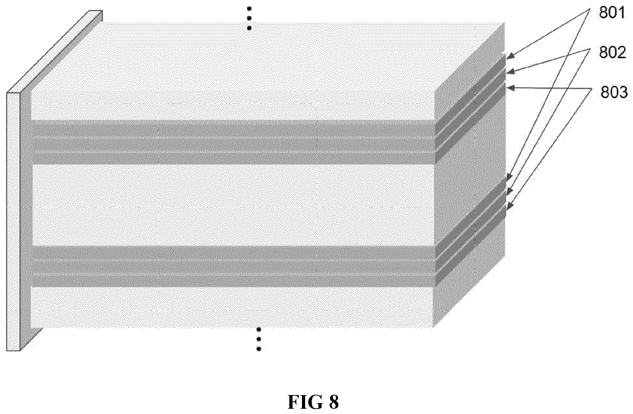

Figure 8 represents another embodiment of the device according to the present disclosure comprising a stack of different PhC slabs 801, 802, 803 with variable and complementary design. The PhC slabs are placed on top of each other to provide a synergistic effect of their properties. For example, one layer can direct a portion of the light towards the extraction surface, while another layer can focus another portion towards particular locations of the extraction surface, creating thus stronger energy flux towards the extraction surface or flux with different characteristics depending on the depth-of-interaction.

While the figure describes a symmetric structure of stacks of different PhC slabs, with the same order and number of layers on each side of the scintillating material, other embodiments might have a different configuration, in particular configurations with different number of PhC slab and technical effect on each of the stacks.

This arrangement is possible for different photon-detector assemblies, such as photon-detector surfaces coupled to one, two or four surfaces of the scintillator assembly. The main feature of interest is that the PhC slab, as described before, is substantially perpendicular to the detection surface. The reason for this is that the purpose of the slab is to enhance optical energy flux towards the lateral directions.

Another preferred embodiment of the proposed disclosure corresponds to PhC slabs configured to interact with scintillation light in such manner as to provide an altered signature for different interaction depth. As the average distance travelled by the totality of scintillation photons is analogous to that between the event onset 203 and photon-detector setup 207, even approximate knowledge of this information can greatly improve the statistical information available per scintillation event. In this sense, depth-of-interaction asymmetries in the photonic slab design that provide different spatial spread for guided photons, depending on the actual depth can further improve the timing resolution of perpendicular PhC slab loaded radiation detectors.

In conclusion, the proposed disclosure includes a variety of embodiments of different characteristics but with the same mission of improving the time resolution of the radiation detector either through improving the statistical characteristics of light incident to the photon-detector setup, include ultrafast scintillators to assist fast photon production or a combination of those features.

Light travelling along the lateral dimensions of the PhC slab has less likelihood to reflect at the conventional edges of the scintillator, meaning that its travel path is shortened and becomes more easily retraceable. In other words, the statistical spread of photon arrival times at the photon-collection device is smaller. As the photon direction towards the detection surface has a practically right angle to the exit surface of the scintillator, such photonic slabs not only shorten the travel path but also enhance extraction efficiency. On top of that, PhC slabs can act as barriers, confining photons within smaller optical volumes, further improving the timing characteristics of scintillation-based detectors with perpendicular PhC slabs. This can be synergistically exploited in the case of metascintillators, as fast light emitted at lower wavelengths does not leak into different materials where it can be easily reabsorbed. Perpendicular PhC slabs are thus addressing practically every aspect of timing resolution deterioration in radiation detectors, while providing useful building blocks to facilitate photon read-out.

## Claims

1. A device for detecting gamma radiation comprising:
- an assembly (201) of scintillating and light-guiding materials, producing scintillation light (205) upon incidence of radiation (203),
- at least one photon-detector device (207) comprising a detection surface, optically coupled to the assembly;
wherein the assembly comprises at least one photonic crystal slab (202) configured to direct said scintillation light (205) towards the detection surface along an extraction direction (209), the extraction direction (209) being substantially perpendicular to the detection surface;
wherein the at least one photonic crystal slab (202) is arranged substantially perpendicular to the detection surface.

2. The device as claimed in claim 1, wherein the at least one photonic crystal slab comprises a periodic pattern with periodicity and features of dimensions between about 10nm and about 1000nm, configured to direct scintillation light through a leaky mode.

3. The device as claimed in claim 1, wherein the at least one photonic crystal slab comprises a periodic pattern with periodicity and features of dimensions between about 10nm and about 1000nm, and scintillating materials, configured to direct scintillation light through a guided mode.

4. The device as claimed in claim 1, wherein the at least one photonic crystal slab is homogenous and configured to direct scintillation light through Fabry-Perot interference.

5. The device as claimed in any one of the preceding claims, wherein the at least one photonic crystal slab has been manufactured with the application of a nanofabricated master mold.

6. The device as claimed in any one of the preceding claims, wherein the at least one photonic crystal slab is directly imprinted on a nano-manufactured scintillator surface.

7. The device as claimed in any one of the preceding claims, wherein the at least one photonic crystal slab comprises materials such as Si, SiO₂,Si₃N₄, SiC, GaP, GaAs, Nb₂O₅, Au, Ag, or a combination thereof.

8. The device as claimed in any one of the preceding claims, wherein the scintillating materials comprises materials such as BGO, LSO, LYSO, GSO, NaI, CsI, BaF2, LaBr3, LuAP, LuAG, GGAG, CdSe, PVT-PPP, MAPbBr3, or a combination thereof.

9. The device of claim 1, wherein the at least one photonic crystal slab has a periodic pattern configured to direct scintillation light predominantly towards a first direction, wherein the first direction is the extraction direction (209), substantially perpendicular to the detection surface.

10. The device as claimed in claim 9, wherein the periodic pattern of the at least one photonic crystal slab is further configured to direct scintillation light towards a second direction, wherein the second direction is perpendicular to the first direction.

11. The device as claimed in claim 1, wherein the at least one photonic crystal slab has features that are geometrically arranged to change depending on a distance from the detection surface.

12. The device as claimed in any one of the preceding claims, comprising a plurality of photonic crystal slabs wherein the photonic crystal slabs of the plurality of photonic crystal slabs are arranged substantially parallel to each other and form a stack.

13. The device as claimed in any one of the preceding claims, wherein the assembly comprises elongated rods, separated by a plurality of photonic crystal slabs.

14. The device as claimed in any one of the preceding claims, wherein the at least one photonic crystal slab comprises a plurality of periodic patterns of features.

15. Method for detecting gamma radiation comprising:
producing scintillation light through interaction of incoming radiation with an assembly of scintillating and light-guiding materials;
detecting the scintillation light with a photon-detector device comprising a detection surface optically coupled to the assembly;
wherein the scintillation light is directed towards the detection surface using at least one photonic crystal slab included in the assembly;
wherein the at least one photonic crystal slab is arranged substantially perpendicular to the detection surface.
